# EUROPEAN PATENT APPLICATION

(11) **EP 4 578 773 A1**
(43) Date of publication of application: **02.07.2025**
(21) Application number: 23220498.2
(22) Date of filing: 28.12.2023
(51) Int. Cl.: B63B 3/06, B63B 35/32, B63B 35/58, B63H 21/17

(54) **PLASTIC COLLECTING BOAT**

(71) Applicant: Mazzitelli, Fabio, 89122 Reggio di Calabria (RC) (IT); Arena, Felice, 89123 Reggio di Calabria (RC) (IT)
(72) Inventor: Mazzitelli, Fabio, 89122 Reggio di Calabria (RC) (IT); Arena, Felice, 89123 Reggio di Calabria (RC) (IT)
(74) Representative: Giuliano, Natalia

(57) **Abstract**

Plastic collection boat (100), comprising:
- a hull consisting of a plurality of modular elements (101) made of a recycled material;
- a tank (102) housed inside the hull, containing waste collected at sea by the plastic collecting boat (100) during a navigation;
- at least two oil-absorbing booms (103), in correspondence with side and/or back portions of the hull, configured for the absorption, during navigation, of hydrocarbons present in the sea.

## Description

The present invention relates to a plastic collecting boat.

In particular, the present invention relates to a plastic collecting boat that allows an effective approach to the resolution of environmental pollution phenomena.

In this sense, plastics dispersed at sea represent a serious problem both internationally and locally. About 71% of the surface of our planet is covered with water, fresh or salty, and it is notoriously one of the indispensable elements for the development and sustenance of all forms of life. Nevertheless, this precious resource is subject to various sources of pollution, mainly of an anthropogenic nature, which can have devastating effects on ecosystems and human health.

Among these, plastic represents one of the most dangerous threats, both in the present and, above all, in the future. Worldwide plastic production, according to WWF estimates in 2016, has experienced continuous and exponential growth since the 1950s, reaching approx. 396 million tonnes in 2016. This growth is constantly increasing and results in a huge amount of waste, the disposal of which represents one of the most significant problems, from an environmental point of view, of the current era. It is estimated that only slightly more than 30% of the plastic in use is recycled or incinerated, and that every year about 8 million tons of plastic are spilled into the sea, of which 570000 in the Mediterranean Sea alone.

This mass has various impacts on marine and ocean ecosystems. It can in fact be directly ingested by fish, turtles and other animals, which can confuse it with their usual food. In addition, it can dissolve due to ultraviolet rays and the action of microbes, generating smaller particles, such as microplastics and nanoplastics, which are assimilated by living organisms along the food chain with effects that are not entirely known, but certainly negative for all its components, especially for those at the top of that chain, that is, large predators and especially humans.

Microplastics have already been found in various foods of daily consumption, for example kitchen salt, and studies to evaluate their effect in the health field are intensifying. The quantities of plastic currently in the sea are uncertain but estimates, again from the WWF in 2016, speak of more than 150 million tons, inevitably destined to increase over time.

Sometimes, these plastics are collected in certain areas forming real plastic islands with significant surfaces. The most burdensome sources of pollution in this regard are related to single-use plastics, on which an important legislative effort is underway aimed at limiting them, and fishing waste.

In this context, the Mediterranean Sea stands out negatively as one of the areas most affected by the problem of plastic in the waters. In fact, since it is a closed basin, it tends to retain waste, which is proportionally very numerous due to the large coastal extension with respect to its surface. It is estimated, for example, that it contains 7% of global marine microplastics compared to 1% of waters, and there have recently been the highest concentrations of plastic fragments on the seabed in the world, on the order of 1.9 million fragments per square meter. Moreover, the particular conformation of the basin, together with the currents, tends to return the waste to the coasts, where it accumulates on average more than 5 kg per day.

It is evident that this represents a further inconvenience for human activities, particularly in the field of tourism. Given the scale of this problem, it is urgent to find solutions that can reduce environmental pressures to safeguard the environment and contain the inevitable impacts on human health itself.

Inevitably, combating this problem requires actions taken on several fronts and, among these, some of the most important in place concern the legislative commitments of the states for the reduction of pollution, the strengthening of recycling and the banning of plastic for some application areas.

However, these procedures are insufficient to counteract such a broad and significant phenomenon and require additional tools capable of involving bodies, both public and private, to maximise their effectiveness.

While most of the measures in place are aimed at preventing the dispersion of waste in the marine environment, the collection of plastic acts directly to reduce the problem already in place and can be particularly effective, especially if carried out near the sources of greatest pollution and if combined with structures and/or vessels capable of carrying out other functions.

To date, the main solution on the market for the collection of plastic at sea consists of special waste collection bins, "Seabin", immersed in the sea and equipped with pumps and filters for the collection of plastic, according to a punctual approach, however limited to about 50 meters of range.

These baskets are able to collect about 1.5 kg of plastic and/or other waste per day, including microplastics and microfibers that are accumulated in a special bag to be emptied manually once filled. Although this class of devices is extremely useful and represents an important step forward with respect to the manual collection, through networks, of waste, it is as specified a timely solution, whose application is limited to limited areas of waste accumulation.

These are strategic points, to be found mainly in port contexts, where the combination of wind and currents naturally conveys waste, facilitating the action of pumps. In addition, these devices require an electrical connection to drive the pumps, potentially resulting in non-zero impact due to energy expenditure.

There are also projects under development relating to the collection of plastic at sea in the ocean environment, however these projects, still at the intermediate stage of development, are necessarily very expensive and difficult to insert into a market context, especially private.

There are different types of boats for collecting waste at sea, in particular plastic, the specifications of which can be consulted in the patent literature.

A first example of a known technical solution is described in patent application CN113607495A, which cites an intelligent sampling system of microplastics based on an unmanned ship. The system is characterized in that an electronic board and a piloting module are arranged in a body of the ship, a sampling unit is arranged in an arcuate groove, an illuminator is integrated in the electronic board, and a sample bottle is arranged on one side, near the bow of the hull, of the electronic board. The system also includes an illumination sensor arranged on one side, near the bow, of the sample bottle. The electronic board includes an acquisition module, a processing module, and a control module, with the acquisition module for acquiring information, the processing module used for issuing control instructions, and the control module used for controlling the unmanned ship according to the aforementioned control instructions.

A second known technical solution is disclosed by patent application CN114593952A, which describes a device for collecting microplastics dispersed in water basins comprising a filtering device with a filtering screen and a collecting tube connected with the end part of the filtering screen. The screen head fixing piece is used to connect the outlet of a sample injection box and the head of the filter screen. A net opening and closing control unit is disposed on the sample injection box, connected to the net head fixing piece, and used to control the net opening of the filtering device. A door opening and closing control unit is disposed on the sample injection box.

Finally, the patent text CN109455272A has as its object a vessel suitable for the automatic removal of floating waste at sea. The ship includes a hull, a waste collection and conveying device with adjustable water inlet angle and depth, fixedly installed at the bow of the hull, a weight lifting crane fixedly installed in the middle of a hull deck, and two waste hoppers placed at the portions, near the two sides of the crane, in the middle of the hull deck.

However, the technical solutions described in the aforementioned patent texts present some limitations, for example they do not allow to cover large marine areas and can therefore only operate on a local scale.

A further limitation of the known plastic collection boats is the complexity of management, essentially due to maintenance activities.

Another limitation of known plastic collection boats, known from the patent literature, is that they do not provide additional services beyond the collection of waste at sea.

Finally, a further limitation of known plastic collection boats is the absence of propulsion by electric motors.

An alternative and already operational technical solution for the collection of plastic is represented by the aforementioned "Seabin", a special basket equipped with pumps and filters capable of collecting waste in particular areas of waste accumulation at sea, mainly in the port area. Developed as part of an Australian project, this product has spread around the world, improving its performance over time. The latest model is able to collect microplastics up to 2 mm and has a capacity of 20 kg, which requires manual emptying. At present, more than eight hundred "Seabins" are installed worldwide, for a cumulative collection to date of about a ton of waste. The main limitations of this technology lie in the fact that it represents a punctual device, in the need for ground support in terms of power supply and connection with operators, and in the relatively small capacity.

Other more ambitious proposals, but not yet implemented, concern the cleaning of offshore storage points, for example in the Pacific Ocean, where plastic waste has generated real islands of enormous size. For example, the non-profit organization "The Ocean Cleanup" aims to collect plastic in ocean storage areas through huge networks, and recycle it to sell products in order to refinance collection activities. Similar initiatives will allow the collection of large quantities of plastic. However, this will inevitably happen at very high costs, first having to transport the net in the middle of the ocean and then periodically collect the accumulated plastic using dedicated boats each time, and will be limited to areas where ocean currents tend to concentrate huge amounts of waste.

Furthermore, the "Manta Project", launched by the association "The Sea Cleaners", aims to develop a boat for the collection of plastic in the open sea by 2023. This boat, whose shape would be similar to that of a manta ray, would have impressive dimensions, approx. 70*49 meters in plan, and would be solely dedicated to the collection of waste at sea, with treatment plants on board. Also in this case, the costs would be extremely high and of the order, for the production of the vessel "Manta" alone, of about 25 million euros. It should therefore be noted that these solutions, still under development, are aimed at the unique functionality of plastic removal in the ocean environment, of possible interest to government associations or non-profit organizations but with limited commercial potential, especially in the private sector.

The purpose of the present invention is to provide a plastic collecting boat that is particularly effective, of immediate application on entire coastal bands, intermediate between port areas and the open sea, thus having characteristics such as to exceed the limits of current known solutions.

Another object of the present invention is to provide a plastic collecting boat characterized by reduced maintenance activities.

A further object of the present invention is to provide a plastic collecting boat that allows the use of additional services and that is of particular interest in the Mediterranean area.

A further object of the present invention is to provide a plastic collecting boat that can be used by different types of users.

Finally, a further object of the present invention is to provide a plastic collecting boat that can be moved by means of renewable energy sources, in particular photovoltaic, connected to relative accumulators adapted to drive one or more electric motors.

According to the present invention a plastic collecting boat as defined in claim 1 is provided.

For a better understanding of the present invention, a preferred embodiment is now described, by way of non-limiting example only, with reference to the accompanying drawings, in which:
- figure 1 shows a schematic three-dimensional overall view of a plastic collecting boat, according to the invention;

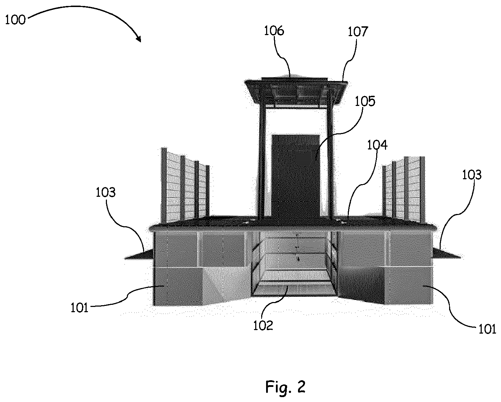

- figure 2 shows a schematic front view of the plastic collecting boat, according to the invention;

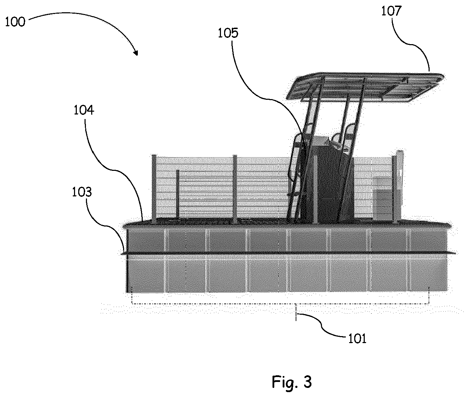

- figure 3 shows a schematic side view of the plastic collecting boat, according to the invention;

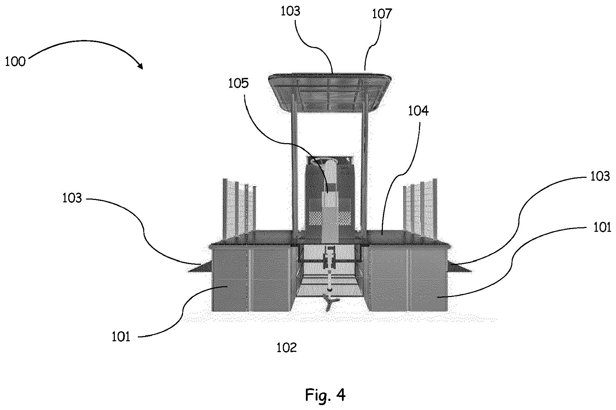

- figure 4 shows a schematic rear view of the plastic collecting boat, according to the invention.

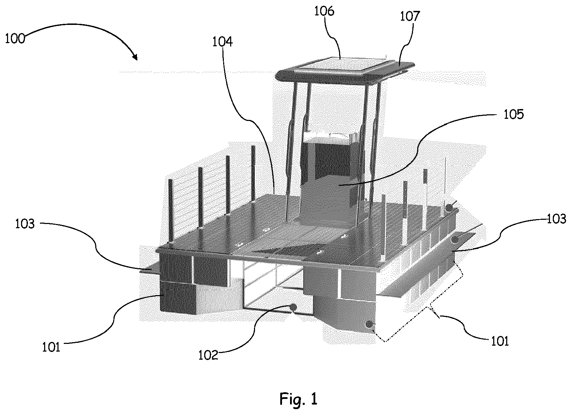

With reference to such figures and, in particular, to figure 1, a plastic collecting boat is shown, according to the invention.

In particular, the plastic collecting boat 100 includes:
- a hull consisting of a plurality of modular elements 101;
- at least one tank 102 housed inside the hull, preferably hollow, made of perforated sheet metal and containing waste collected at sea by the plastic collecting boat (100) during navigation in the same sea;

- at least two oil-absorbing booms (103), placed respectively in correspondence with side and/or back portions of the hull, configured for the absorption of hydrocarbons;
- a decking 104 positioned over substantially an entire upper portion of the hull;
- at least one filter element configured to separate, during navigation, micro/nanoplastics present in the sea.

According to one aspect of the invention, the modular elements 101, referred to as "Cubo-dock", side by side and superimposed to compose the hull of the boat 100, according to an approximately "C" shape inverted with respect to the waterline, are preferably made of totally recyclable high density polyethylene resin.

According to another aspect of the invention, the modular elements 101 are certified in terms of constructional quality and buoyancy.

According to one aspect of the invention, the oil-absorbing booms 103, configured for the absorption during navigation of hydrocarbons and their derivatives, including mixed, deteriorated and very dense oils, present in the sea, are made of hydrophobic material.

According to one aspect of the invention, the oil-absorbing booms 103 are reusable up to about two hundred times, thanks to the fact that they can be squeezed.

According to another aspect of the invention, the boat 100 comprises a piloting station 105 installed on the decking 104.

According to another aspect of the invention, the aforementioned decking 104 is preferably constituted by almond-plated sheet metal made of aluminium.

According to one aspect of the invention, the decking 104 represents the upper portion of an assembly frame of the plurality of modular elements 101, entirely made of aluminium.

According to another aspect of the invention, the decking 104, preferably rectangular in shape, is made in two preferential dimensions, the first with approximate measures of 4 meters x 3 meters, the second with approximate measures of 7 meters x 4.5 meters.

According to one aspect of the invention, the first of the aforementioned implementations of the boat 100, with a plan of about 4 meters x 3 meters, is suitable for applications in small port basins or for cleaning small bodies of water and under the coast.

According to another aspect of the invention, the second of the aforementioned implementations of the boat 100, with a plan of about 7 meters x 4.5 meters, is suitable for use in medium-sized port basins or for cleaning large bodies of water, however more exposed.

According to one aspect of the invention, the collection of plastic at sea, operated by the boat 100, is contextual to the movement of the same boat 100. This functional aspect causes the boat 100 to head, maneuvered by a user positioned in the aforementioned piloting station 105, or autonomously, towards the points of interest for collection, acting on large areas, compared to similar point devices, and ensures greater collection volumes. From a functional point of view, the boat 100, as said with a modular composition, similar to a catamaran, consists of modular elements 101 of cubic or parallelepiped shape, composed entirely of a recycled material.

According to one aspect of the invention each modular element 101 has dimensions of each side comprised between 30 cm and 120 cm.

According to one aspect of the invention, each modular element 101 has preferential dimensions of 100 cm x 50 cm x 40 cm.

According to one aspect of the invention, said configuration corresponds to the union of two individual elements side by side, each having preferential dimensions equal to 50 cm x 50 cm x 40 cm.

Preferably, individual cubic elements are employed at the lower portion of the hull, where a funnel-shaped fitting is provided for conveying plastic into the tank 102.

According to one aspect of the invention, the tank 102 is configured to collect waste at a bow portion of the boat 100, during navigation at sea. During the motion of the boat 100, therefore, the water pours into the tank from the bow and then exits from the clean stern. The collected waste is stored inside the tank and/or the hull, and then removed. Downstream of the tank 102, constituted as in advance by a perforated sheet, specifically a square mesh stainless steel mesh mesh of dimensions preferably between 5 mm x 5 mm and 20 mm x 20 mm and even more preferably equal to 10 mm x 10 mm in such a way as to act as a filter for waste of a size equal to or greater than 10 mm, and behind this, the filtering element suitable for the removal of microplastics and nanoplastics is positioned, a useful operation in order to purify as much as possible the water entering the boat 100.

According to one aspect of the invention, the tank 102 has a parallelepiped shape and is not equipped with a cover, i.e. it is open-air.

According to one aspect of the invention, the boat 100 comprises at least one outboard electric motor, configured for propelling the boat 100 itself.

According to another aspect of the invention, the boat 100 comprises:
- at least one battery pack to power the electric motor;
- at least one photovoltaic module 106, connected to the aforementioned battery pack, configured to carry out periodic charging operations of the same battery pack.

According to one aspect of the invention, the boat 100 comprises a covering module 107 of the piloting station 105, which also houses the photovoltaic modules 106 above.

According to one aspect of the invention, the boat 100 comprises an electronic control unit provided with an automatic detection module, which is designed to detect a threshold value, programmable by an operator, for filling the tank with waste.

According to one aspect of the invention, said detection module is implemented in a dual configuration, a first basic configuration, which preferably exploits a coloured notch controlled by an operator, and an actual automatic detection comprising a sensor that measures the surface covered by the plastic collected inside the tank 102, or a different appropriately calibrated parameter, and which activates a specific alert for emptying said tank 102.

According to one aspect of the invention, the battery pack serving the outboard electric motor of the boat 100 is rechargeable, as an alternative to the photovoltaic modules 106, from a charging station on the ground.

According to one aspect of the invention, the boat 100 also comprises an emptying module, electroactuated, connected to the electronic control unit and to the tank.

According to one aspect of the invention, the electronic control unit is configured to operate emptying module of the tank 102 upon exceeding the filling threshold value of the same tank.

According to one aspect of the invention, to facilitate lifting and emptying, the tank 102 is made by two elements: a first parallelepiped module positioned between the bow, specifically from the aforementioned funnel-shaped connection to the centerline of the boat, and a second parallelepiped module positioned between the centerline and the stern.

According to one aspect of the invention, the first parallelepiped module of the tank 102 has dimensions ranging from 100-170 cm x 50-100 cm x 80-120 cm, preferably equal to about 143 x 80 x 100 cm, while the second parallelepiped module has dimensions ranging from 80-120cm x 50-100 cm x 80-120 cm and preferably equal to about 103 x 80 x 100 cm. At the bow, centerline and stern there are guillotines/bulkheads, inserted inside guides, such that the first and second parallelepiped modules are communicating during the movement of the boat 100. In this case, in motion, only the stern guillotine/bulkhead is operating to retain the collected waste material. The guillotine at the centre line of the boat 100 has the function of making the two parallelepiped modules independent, while the guillotine at the bow is lowered when the boat 100 is stationary or in manoeuvre.

According to one aspect of the invention, the boat 100 is provided with at least one auxiliary device comprised in the group consisting of:
- towing vehicle;
- winch;
- maintenance equipment;
- unit configured for squeezing the oil-absorbing booms 103;
- crane.

According to one aspect of the invention, the unit configured for squeezing the oil-absorbing booms 103 is capable of squeezing up to 180 litres/minute of hydrocarbons and their derivatives from the same oil-absorbing booms 103.

According to another aspect of the invention, the oil-absorbing booms 103 are made of open-cell polyurethane foam, with a hydrophobic effect of more than 95%.

According to another aspect of the invention, the oil-absorbing booms 103 comprise in their filtering action special fringed carpets, installed in the rear portion of the hull of the boat 100, suitable for removing the filler.

According to one aspect of the invention, the oil-absorbing booms 103, present in a preferential number of four, comprise first trailing filler mats of dimensions preferably comprised between 100-180 cm x 20-80 cm x 1.5-5 cm, even more preferably equal to 150 x 33 x 2.5 cm, fringed at the rear portion of the hull, and second mats of dimensions preferably comprised between 200-400 cm x 20-80 cm x 1.5-5 cm, even more preferably equal to 300 x 33 x 2.5 cm on the outer sides of the boat 100, for the purpose of oil/hydrocarbon absorption.

According to one aspect of the invention, the fringed rear oil-absorbing booms 103 are hooked to the frame of the boat 100 once the patrol and collection phase has begun, and released before proceeding with the mooring maneuvers of the boat itself. The side oil-absorbing booms 103 are instead fixed to suitable movable arms, integral with the frame of the boat 100, of such dimensions as to ensure that the booms remain watertight during the absorption phase. The aforementioned arms are movable, so as to be able to position the booms vertically and out of the water in the mooring, dismounting and manoeuvring phases of the boat or in the case of any operations in which the use of the same oil-absorbing booms 103 is not envisaged.

In use, during the navigation of the boat 100, the collected waste is stored inside the tank 102 and/or the hull, and then emptied, manually or automatically, upon reaching the threshold value, of appropriate and programmable definition. The covering module 107, for example a T-Top, is structured so as to protect the operator from atmospheric factors during navigation.

According to one aspect of the invention, each parallelepiped module into which the tank 102 is divided can be emptied manually or by overturning the tank 102 itself.

Furthermore, as alternatives, further emptying methods comprise that the tank 102 has an openable bottom, an inclined bottom and an automatic mechanical grid for the removal of the collected waste with consequent emptying in suitable on-board storage areas, or even extractable elements that are automatically lifted and stored on board, to then be emptied on the mainland and replaced with empty elements.

According to one aspect of the invention, the filter element is positioned between the tank 102 and the electric motor.

According to one aspect of the invention, the filter element is placed inside a metal cage preferably made of the same metal mesh with which the collection tank 102 is constituted.

According to one aspect of the invention, the main market sectors affected by the boat 100 are port infrastructures and beach properties, promoting their eco-sustainability without compromising the necessary operational functions.

According to one aspect of the invention, the boat 100 is employable for recreational, surveillance and rescue activities.

According to one aspect of the invention, the boat 100 is adapted to be used by maritime operators of various kinds, including construction companies, fish farming plants and local administrations.

Advantageously, according to the invention, the boat 100, operating along the coastal strips, allows the tourist satisfaction index of the same coasts to be maintained unchanged.

Advantageously according to the invention, the boat 100 is scalable with reference to its size, costs and performance.

Advantageously according to the invention, the modularity of the boat 100 allows it to be assembled directly in situ, minimising component volumes and shipping costs.

Advantageously according to the invention, the modularity of the boat 100 allows it to be built in different sizes, depending on the scope of use.

Advantageously according to the invention, the modularity of the boat 100 ensures an easy replacement of one or more of the modular elements 101.

Advantageously according to the invention, the collection operations of the boat 100 contribute to preserving the marine habitat, including the flora and fauna forming part of the food chains of interest to humans.

According to one aspect of the invention, the boat 100 is adapted to operate even when stationary, thanks to the presence of auxiliary pumps that direct the flow of water from bow to stern.

Advantageously according to the invention, the technical specifications of the boat 100 are consistent with the objectives of the Smart Specialisation Strategy, or S3, of the Calabria Region.

Advantageously according to the invention, the boat 100 is eco-sustainable, with autonomous power supply and zero emissions, environmental benefits that are added to the main one related to the collection of plastic at sea.

Advantageously according to the invention, the multifunctional nature of the boat 100 facilitates its insertion in various operational contexts, including private ones such as beach properties, and technical-economic sustainability.

Therefore, the plastic collecting boat according to the invention allows an effective approach to the problem of waste, particularly plastic, at sea.

In addition, the plastic collecting boat according to the invention is immediately applicable on the coastal strips, intermediate between the port areas and the open sea.

Another advantage of the plastic collecting boat according to the invention is that it is environmentally friendly.

Another advantage of the plastic collecting boat according to the invention is that it is highly scalable, by virtue of its modular construction and the possibility of integrating auxiliary functional blocks.

Another advantage of the plastic collecting boat according to the invention is that it is low cost.

Finally, the plastic collecting boat according to the invention is easily replicable on a large scale, within a series production.

Finally, it is clear that modifications and variants can be made to the plastic collecting boat according to the invention, described and illustrated herein, without departing from the protective scope of the present invention, as defined in the attached claims.

## Claims

1. Plastic collecting boat (100), comprising:
- a hull consisting of a plurality of modular elements (101) made of a recycled material;
- at least a tank (102) housed inside the hull, able to contain waste collected at sea by the plastic collecting boat (100) during a navigation;
- at least two oil-absorbing booms (103), placed respectively in correspondence with side and/or back portions of the hull, configured for the absorption, during the navigation, of hydrocarbons present in the sea.

2. Plastic collecting boat (100) according to claim 1, **characterized in that** the tank (102) is configured to collect waste in correspondence with a bow portion of said plastic collecting boat (100) during the navigation in sea.

3. Plastic collecting boat (100) according to claim 1, **characterized in** comprising at least one filter element configured to separate, during the navigation, microplastics and nanoplastics present in the sea.

4. Plastic collecting boat (100) according to claim 1, **characterized in that** each modular element comprised in the plurality of modular elements (101) has a cubic or parallelepiped shape.

5. Plastic collecting boat (100) according to claim 1, **characterized in that** said oil-absorbing booms (103), are made of open-cell polyurethane foam and include trawl mats for fillers.

6. Plastic collecting boat (100) according to claim 1, **characterized in** comprising:
- at least one electrical motor, housed in the hull, configured for the propulsion of said plastic collecting boat (100);
- at least one battery pack able to power the at least one electrical motor; and
- at least one photovoltaic module (106), connected to said at least one battery pack, configured to perform periodic recharging operations of the at least one battery pack.

7. Plastic collecting boat (100) according to claim 6, **characterized in** comprising a covering module (107) of at least one portion of the hull, housing on top the at least one photovoltaic module (106).

8. Plastic collecting boat (100) according to claim 1, **characterized in** comprising an electronic control unit provided with an automatic detection module of a waste filling threshold value of said tank (102).

9. Plastic collecting boat (100) according to claim 8, **characterized in** comprising an emptying module connected to the electronic control unit and to the tank (102), said electronic control unit being configured to activate the emptying module, able to empty the tank (102), when the waste filling threshold value of said tank (102) is exceeded.

10. Plastic collecting boat (100) according to claim 1, **characterized in that** said plastic collecting boat (100) is provided with at least one auxiliary device comprised in the group consisting of:
- towing vehicle;
- winch;
- maintenance equipment;
- crane;
- unit configured for wringing at least two oil-absorbing creams (103).
